# NOUVEAU FASCICULE DE BREVET EUROPEEN

(11) **EP 1 461 560 B2**
(45) Date de publication et mention de la décision concernant l'opposition: **17.08.2016**
(45) Mention de la délivrance du brevet: 02.09.2009
(21) Numéro de dépôt: 02804243.0
(22) Date de dépôt: 03.12.2002
(51) Int. Cl.: F16L 15/00, F16L 15/06

(54) **JOINT FILETE TUBULAIRE SUPERIEUR COMPRENANT AU MOINS UN ELEMENT FILETE AVEC LEVRE D EXTREMITE**
RÖHRENFÖRMIGE QUALITÄTSGEWINDEVERBINDUNG MIT MINDESTENS EINEM GEWINDEELEMENT MIT ENDLIPPE
PREMIUM TUBULAR THREADED JOINT COMPRISING AT LEAST A THREADED ELEMENT WITH END LIP

(30) Priorité: 07.12.2001 FR 0115870
(43) Date de publication de la demande: 29.09.2004
(73) Titulaire: VALLOUREC OIL AND GAS FRANCE, 59620 Aulnoye-Aymeries (FR); Nippon Steel & Sumitomo Metal Corporation, Tokyo 100-8071 (JP)
(72) Inventeur: DUTILLEUL, Pierre, F-59144 Jeanlain (FR); ROUSSIE, Gabriel, F-59370 Mons en Baroeul (FR); VERGER, Eric, F-59144 Gommegnies (FR)
(74) Mandataire: Julio, Charlotte
(86) Numéro de dépôt international: PCT/FR2002/004144
(87) Numéro de publication internationale: WO 2003/048623

(56) Documents cités:
- WO-A-00/22339
- WO-A-99/08034
- CA-A1- 2 389 216
- CN-Y- 2 366 656
- GB-A- 2 098 689
- JP-A- H08 247 351
- US-A- 3 870 351
- US-A- 4 538 840
- US-A- 4 611 838
- US-A- 4 795 200
- US-A- 6 047 997

## Description

L'invention concerne les joints filetés tubulaire dits supérieurs (ou "premium") comprenant au moins un jeu de portées d'étanchéité métal-métal et de butées de vissage sur les éléments filetés mâles et femelles qui composent le joint fileté, les éléments filetés étant réalisés en extrémité de composant tubulaire du type tube de grande longueur ou court (manchon).

On connaît de nombreux types de joints filetés tubulaires utilisés notamment pour constituer des colonnes de tubes de cuvelage ou de production ou des trains de tiges de forage pour les puits d'hydrocarbures ou pour des puits similaires, tels que, par exemple, des puits pour la géothermie.

On connaît aussi des joints filetés tubulaires sur dés colonnes montantes dites "risers" destinées à relier les puits au fond des océans aux plates-formes d'exploitation en mer dites "offshore".

De tels joints filetés tubulaires sont soumis à des sollicitations globales diverses (traction ou compression axiales, pression intérieure ou extérieure de fluide, flexion, torsion), éventuellement combinées (par exemple traction axiale + pression intérieure), d'intensité éventuellement fluctuante.

Les joints filetés tubulaires supérieurs doivent non seulement résister à la rupture mais rester étanches, notamment aux gaz, malgré de telles sollicitations éventuellement combinées et malgré des conditions d'emploi rudes sur chantier.

Les sollicitations peuvent éventuellement changer de nature durant la descente des tubes dans le puits ou l'exploitation, les sollicitations de traction pouvant par exemple évoluer momentanément en sollicitations de compression.

Les joints filetés doivent aussi pouvoir être vissés et dévissés plusieurs fois sans dégradation de leurs performances, notamment par grippage.

Après dévissage, les composants tubulaires peuvent être réutilisés dans d'autres puits dans d'autres conditions de service.

Les brevets FR 1489013 et EP 488912 décrivent des examples de tels joints filetés tubulaires supérieurs, notamment pour assemblage dit manchonné de 2 tubes de grande longueur par l'intermédiaire d'un manchon fileté.

Le brevet US 5 687 999 et US 4 494 777 décrivent d'autres exemples d'un joint fileté tubulaire supérieur dit intégral, directement entre 2 tubes de grande longueur.

Les joints filetés tubulaires selon les brevets FR 1489013, EP 488912 et US 4494777 présentent une surface frontale de butée axiale en extrémité libre d'au moins un des éléments filetés, généralement l'élément mâle, et une portée d'étanchéité sur une surface périphérique d'un élément fileté immédiatement adjacente à la surface frontale du même élément fileté.

La partie de l'élément fileté entre le premier filet du filetage et la surface frontale de butée axiale en extrémité libre est généralement désignée sous le nom de lèvre.

Dans de nombreux joints filetés supérieurs et notamment pour les 3 brevets dernièrement cités, la portée d'étanchéité mâle est située en extrémité de lèvre mâle, laquelle est plus ou moins longue selon les joints filetés.

Lorsqu'un joint fileté tubulaire supérieur est vissé en position d'assemblage, les butées axiales sont sous pression de contact de manière à créer une réaction égale à un couple de vissage donné Tₘ.

Les portées d'étanchéités mâles et femelles correspondantes présentent alors une interférence radiale génératrice d'une pression de contact et les flancs de filet dits "porteurs" situés sur le filet du côté opposé à l'extrémité libre de l'élément fileté sont en contact sous pression de contact, mettant ainsi sous compression axiale la lèvre.

Les portées d'étanchéités interférentes peuvent poser des problèmes de grippage au cours du vissage si leur géométrie est inadaptée. Elles peuvent aussi poser des risques de fuite en service si la pression de contact et notamment la pression de contact intégrée sur la largeur active des portées d'étanchéité est insuffisante.

Pour éviter le risque de fuite il est nécessaire que la pression de contact intégrée reste supérieure à une certaine valeur exprimée en N/mm ; cette pression de contact intégrée est fonction pour une géométrie donnée du positionnement relatif des éléments en fin de vissage et des sollicitations en service.

Il est particulièrement difficile d'obtenir un joint fileté tubulaire qui résiste de manière équivalente au tube aux diverses sollicitations en service et qui reste étanche aux gaz sous ces sollicitations, l'état de contrainte après vissage étant modifié par l'application de sollicitations extérieures en service, par exemple traction ou compression axiale, flexion, pression intérieure ou extérieure.

Le brevet US 4 611 838 décrit un joint fileté supérieur dont les caractéristiques d'étanchéité résultent :
a) d'une forme particulière d'extrémité libre d'une lèvre mâle comportant sur une fraction de l'épaisseur radiale de la lèvre une projection axiale, et coopérant avec une forme correspondante d'un épaulement sur l'élément fileté femelle de manière à soutenir l'extrémité libre de la lèvre mâle en position assemblée du joint fileté, la surface frontale d'extrémité de la projection axiale constituant une surface distale de butée axiale avec une surface correspondante de l'élément femelle ;
b) d'une forme bombée convexe d'une portée d'étanchéité disposée sur la surface périphérique extérieure d'une lèvre mâle, s'étendant sans discontinuité jusqu'à la surface distale de butée axiale et coopérant avec une portée d'étanchéité conique sur la surface intérieure d'un logement femelle.

Du fait des formes des portées d'étanchéité, le contact entre celles-ci s'effectue à distance de la surface distale de butée axiale.

Le soutien de l'extrémité libre de la lèvre mâle par la forme de l'épaulement femelle permet d'accroitre la pression de contact entre portées d'étanchéité et donc les propriétés d'étanchéité du joint.

La projection axiale en extrémité libre mâle entraine une faible épaisseur radiale de la surface distale de butée axiale.

On notera également que la forme bombée sans discontinuité de la portée d'étanchéité rend celle-ci particulièrement vulnérable aux manipulations sur chantier et à l'engagement des éléments.

On a cherché à obtenir un joint fileté tubulaire supérieur avec butée axiale située en extrémité libre de lèvre d'au moins un élément fileté qui présente une résistance maximale aux fuites lorsque le joint fileté est soumis à des pressions intérieures ou extérieures élevées et qui conserve cette résistance aux fuites lorsque le joint fileté est soumis à un effort extérieur de traction élevé, effort de traction qui tend à séparer axialement les surfaces correspondantes des butées et surtout des portées.

L'effort de traction peut provenir de sollicitations de traction axiale ou de flexion. Les termes "effort de traction" ou "charge de traction" regroupent dans la suite du présent document l'ensemble des sollicitations extérieures qui soumettent tout ou partie du joint fileté tubulaire à de tels efforts ou charges.

On peut caractériser un tel joint fileté par la variation de l'intégrale de pression de contact entre portées d'étanchéité sur leur largeur (ou pression de contact intégrée) en fonction de la charge de traction exprimée en % de la charge correspondant à la limite élastique des tubes de la colonne.

On a aussi cherché à minimiser les risques de grippage au vissage du joint fileté tubulaire.

On a de plus cherché à ce que l'invention s'applique avantageusement à un joint fileté comportant au moins 2 butées axiales dont une butée externe et une butée interne.

On a encore cherché à ce que le joint fileté puisse être facilement vissé sur chantier.

On a encore cherché à ce que les performances d'étanchéité théorique du joint fileté ne soient pas susceptibles d'être significativement réduites du fait des conditions difficiles de mise en oeuvre sur chantier.

Ces objets sont atteints avec un joint fileté selon la revendication 1.

Le joint fileté selon invention comprend tout d'abord de manière connue un élément fileté mâle à l'extrémité d'un premier composant tubulaire et un élément fileté femelle à l'extrémité d'un second composant tubulaire.

L'élément fileté mâle comprend un filetage mâle, au moins une portée d'étanchéité mâle sur sa surface périphérique extérieure et au moins une surface mâle de butée axiale.

L'élément fileté femelle comprend de façon correspondante un filetage femelle, au moins une portée d'étanchéité femelle sur sa surface périphérique intérieure et au moins une surface femelle de butée axiale.

Le filetage mâle est vissé dans le filetage femelle jusqu'à ce qu'au moins une surface mâle de butée axiale coopère en butée en formant réaction au couple de vissage avec la surface femelle correspondante de butée axiale, chaque portée d'étanchéité mâle interférant alors avec la portée d'étanchéité femelle correspondante.

Sur au moins un élément fileté une surface de butée en réaction de butée parmi la ou les surfaces de butée est réalisée sur la surface frontale d'extrémité libre de l'élément fileté et est dite surface distale de butée axiale.

Une lèvre sépare la surface distale de butée axiale du filetage sur l'élément fileté considéré, une portée d'étanchéité dite "portée d'étanchéité sur lèvre" étant disposée sur cette lèvre à une distance axiale donnée de l'extrémité du filetage.

La lèvre est donc soumise à des efforts de compression axiale résultant de la mise en butée en réaction de butée de la surface distale de butée axiale avec la surface de butée axiale correspondante.

Selon une caractéristique propre à invention, la lèvre comprend une partie dite "appendice" entre la portée d'étanchéité sur lèvre et la surface distale de butée axiale en extrémité libre de la lèvre.

Cet appendice permet de donner à la lèvre à la fois une forte raideur radiale et une faible raideur axiale.

On connaît par les brevets US 4 624 488 et US 4 795 200 des joints filetés possédant un appendice entre une portée d'étanchéité et une surface frontale d'extrémité libre d'un élément fileté.

Mais dans aucun de ces 2 brevets, la surface frontale d'extrémité libre n'est une surface de butée en réaction de butée au couple de vissage et l'appendice n'exerce pas le même ensemble de fonctionnalités.

L'appendice selon Fugerson (US 4624488) permet de protéger la portée de marques résultant de coups lors de manipulations sur chantier et d'augmenter la résistance mécanique à la rupture du joint fileté par traction axiale.

Toutefois, le joint décrit dans le document US4624488 ne comporte pas de surface dite "surface distale de butée axiale" réalisée sur la surface frontale d'extrémité libre de l'élément fileté et coopérant sur substantiellement toute sa surface avec une surface de butée axiale sur l'élément conjugué.

Le brevet US 4 624 488 décrit donc un joint fileté tubulaire supérieur comprenant un élément fileté mâle à l'extrémité d'un premier composant tubulaire et un élément fileté femelle à l'extrémité d'un second composant tubulaire, l'élément fileté mâle comprenant un filetage mâle, au moins une portée d'étanchéité mâle sur sa surface périphérique extérieure et au moins une surface mâle de butée axiale, l'élément fileté femelle comprenant de manière correspondante un filetage femelle, au moins une portée d'étanchéité femelle sur sa surface périphérique intérieure et au moins une surface femelle de butée axiale, le filetage mâle étant vissé dans le filetage femelle jusqu'à ce qu'au moins une surface mâle de butée axiale coopère en réaction de butée au couple de vissage avec la surface femelle de butée axiale correspondante, chaque portée d'étanchéité mâle interférant alors radicalement avec une portée d'étanchéité femelle correspondante, une lèvre séparant du filetage l'extrémité libre de chaque élément fileté, une portée d'étanchéité dite "portée d'étanchéité sur lèvre" étant disposée sur la lèvre à une distance donnée de l'extrémité du filetage, la lèvre comprenant une partie dite "appendice" entre l'extrémité libre de la lèvre et la portée d'étanchéité sur lèvre, la surface périphérique dudit appendice étant distincte de la portée d'étanchéité sur lèvre, l'inclinaison de la portée d'étanchéité sur lèvre par rapport à l'axe du joint étant supérieure à celle du filetage.

L'appendice selon Tung (US4795200) permet en outre d'augmenter la raideur radiale de la lèvre sur un joint fileté sans surface distale de butée axiale et par-là d'augmenter la pression de contact au niveau des portées d'étanchéité sur ce joint fileté. Toutefois, le joint décrit dans le document US4795200 ne comporte pas de surface dite "surface distale de butée axiale" réalisée sur la surface frontale d'extrémité libre de l'élément fileté et coopérant sur substantiellement toute sa surface avec une surface de butée axiale sur l'élément conjugué.

Ainsi, les joints décrits dans les deux documents précédents (US4624488 et US4795200) sont très différents du joint décrits dans notre invention car ils ne font pas coopérer leur appendice avec une surface distale de butée (par ailleurs absente).

Un autre document (CN2366656Y) décrit également un joint fileté possédant un appendice entre une portée d'étanchéité et une surface frontale d'un élément fileté coopérant avec une surface de butée axiale ménagé sur l'élément conjugué. Toutefois, il ne comporte pas de portée d'étanchéité d'inclinaison par rapport à l'axe du joint supérieure à celle du filetage. De plus, l'appendice n'est pas raccordé à la surface d'étanchéité au moyen d'une surface torique concave. L'effet de ces différences est que le joint décrit dans le document CN2366656Y est davantage sujet au grippage et admet un comportement plus raide en sollicitation axiale que le joint conforme à notre invention.

Les inventeurs ont tout d'abord constaté que l'appendice selon la présente invention augmentait également la raideur radiale de la lèvre sur un joint fileté tubulaire avec surface distale de butée axiale et que cette augmentation de raideur se traduisait sur le joint fileté tubulaire supérieur par une augmentation de la largeur axiale de contact effectif de la portée d'étanchéité sur lèvre et de la pression de contact intégrée sur cette largeur distale de butée axiale.

Une telle augmentation n'est pas évidente par rapport à l'enseignement du brevet Tung car la compression axiale de la lèvre tend généralement à mettre "en banane" la lèvre et aurait pu réduire la largeur effective de contact des portées d'étanchéité et la pression de contact intégrée.

Les inventeurs ont aussi constaté que, de manière non évidente, l'augmentation de raideur radiale due à l'appendice se traduisait aussi sur le joint fileté tubulaire supérieur selon l'invention par une augmentation de la largeur radiale de contact effectif de la surface distale de butée axiale ainsi que de la pression de contact intégrées sur la largeur radiale de cette surface distale de butée axiale.

Un tel effet ne pouvait être connu ou déduit du brevet Tung qui ne considère pas de telles surfaces distales de butée axiale.

Les inventeurs ont encore constaté un autre effet non évident de l'appendice sur le joint fileté tubulaire selon l'invention.

L'appendice réduit la raideur axiale de la lèvre et par conséquent augmente à contrainte constante de compression axiale la déformation élastique de la lèvre.

Cette déformation élastique augmentée permet lorsqu'une charge de traction est exercée sur le joint fileté de décaler le décollement de la butée et surtout la valeur critique de pression de contact intégrée sur la largeur de la portée d'étanchéité sur lèvre vers des valeurs relativement élevées de charge de traction.

Là encore un tel effet ne pouvait être connu ou déduit de manière évidente du brevet Tung qui ne considère pas les joints filetés tubulaires munis de surface distale de butée d'étanchéité et qui ne considère pas les risques de fuite sous sollicitations de traction.

D'autres effets bénéfiques et avantageux de l'appendice sur un joint fileté tubulaire supérieur selon invention pourront être déduits des modes particuliers de réalisation de l'invention exposés ci-après.

Du côté portée d'étanchéité sur lèvre, l'appendice peut être bordé par une surface périphérique quelconque mais une surface périphérique sensiblement cylindrique est préférée de manière à maximiser épaisseur radiale de la surface distale de butée axiale.

Préférentiellement, la longueur axiale de l'appendice est comprise entre 8 et 75 % de la longueur totale de la lèvre et plus particulièrement entre 20 et 60 % de celle-ci.

Préférentiellement le rapport longueur axiale de l'appendice sur épaisseur radiale de surface distale de butée axiale est inférieur à 3.

Avantageusement, chaque portée d'étanchéité sur lèvre est une surface choisie parmi le groupe des surfaces coniques, toriques ou des surfaces complexes comprenant une combinaison de surfaces coniques, de surfaces cylindriques et/ou d'une ou plusieurs surfaces toriques.

Très avantageusement, une ou au moins une portée d'étanchéité sur lèvre est une surface complexe comprenant deux portions de surfaces tangentes entre elles, à savoir une portion conique située du côté de la surface distale de butée axiale et une portion torique de grand rayon, par exemple supérieur à 20 mm, située du côté filetage, la portée d'étanchéité correspondante sur l'autre élément fileté étant une surface conique de conicité sensiblement identique à celle de la portion conique de la portée d'étanchéité sur lèvre et de largeur axiale adaptée à la largeur axiale totale de la portée d'étanchéité sur lèvre.

Une telle configuration de surface complexe permet indépendamment de la présence ou non d'un appendice d'augmenter la pression de contact intégrée sur la largeur de la portée d'étanchéité sur lèvre.

Très préférentiellement, chaque portée d'étanchéité sur lèvre possède une inclinaison moyenne d'au moins 10° par rapport à l'axe du joint fileté.

Très préférentiellement, la portée d'étanchéité sur lèvre possède une largeur axiale inférieure ou égale à 10 mm et préférentiellement inférieure ou égale à 5 mm.

Préférentiellement la surface distale de butée axiale est une surface plane perpendiculaire à l'axe du joint fileté ou une surface conique coaxiale au joint fileté de demi-angle au sommet compris entre 70° et 90°, ce qui tend dans ce dernier cas à favoriser le contact entre la portée d'étanchéité sur lèvre et la portée d'étanchéité correspondante.

Les figures ci-après illustrent certains modes de réalisation de l'invention qui vont être décrits de manière détaillée.
La figure 1 représente en demi coupe axiale un assemblage fileté tubulaire manchonné de l'état de la technique.
La figure 2 représente en demi coupe axiale un assemblage fileté tubulaire manchonné selon l'invention.
La figure 3 représente en demi coupe axiale un assemblage fileté tubulaire intégral pour colonne montante sous-marine selon l'invention.
La figure 4 représente en demi coupe axiale un assemblage fileté tubulaire intégral selon l'invention dit "flush", c'est-à-dire ne présentant pas de perturbation de diamètre extérieur ou intérieur au niveau du joint fileté tubulaire.
La figure 5 représente un agrandissement de l'extrémité libre de l'élément fileté mâle de la figure 2.
La figure 6 représente l'extrémité libre de la figure 5 après assemblage avec les parties correspondantes femelles.
La figure 7 représente un agrandissement de l'extrémité libre de l'élément fileté mâle de la figure 3.
La figure 8 représente schématiquement l'extrémité libre de l'élément fileté mâle de la figure 1 (état de la technique).
Les figures 9 à 11 représentent schématiquement et comparativement à la figure 8 trois variantes de cette extrémité libre selon l'état de la technique.
La figure 12 représente un graphique de la largeur de contact et de la pression de contact intégrée sur cette largeur au niveau de la surface distale de butée axiale et de la portée d'étanchéité sur lèvre en fonction de la charge de traction axiale exercée sur le joint fileté tubulaire de la figure 1 (état de la technique).
La figure 13 représente le même graphique pour le joint fileté tubulaire selon l'invention de la figure 2.
La figure 14 représente schématiquement quelques filets mâles assemblés avec quelques filets femelles sur le joint fileté tubulaire de la figure 2.
Les figures 15, 16 et 17 représentent schématiquement des dispositions des éléments filetés lors de l'engagement de ces éléments avant vissage en cas de désalignement soit radial (figures 15, 16) ou angulaire (figure 17).

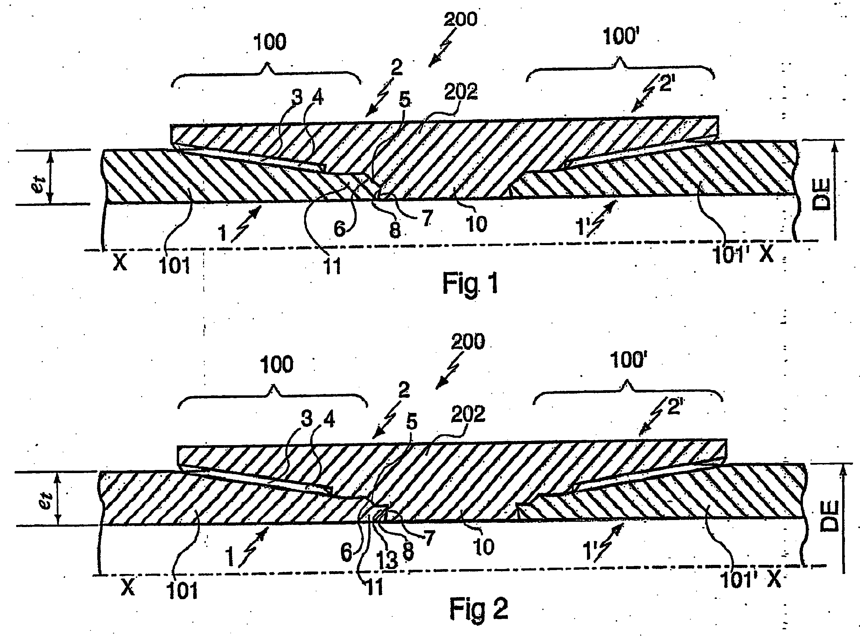

La figure 1 représente un assemblage fileté manchonné 200 de l'état de la technique entre deux tubes 101, 101' qui sont des composants tubulaires de grande longueur par l'intermédiaire d'un manchon 202 qui est un composant tubulaire de faible longueur.

Par tube ou composant tubulaire de grande longueur, on entend des tubes de plusieurs mètres de longueur, par exemple d'environ 10 m de longueur.

Des assemblages 200 sont couramment utilisés pour constituer des colonnes de tubes de cuvelage ou de production pour les puits d'hydrocarbures, des colonnes montantes sous-marines (risers) ou des trains de tiges de forage pour ces mêmes puits.

Les tubes peuvent être réalisés en toutes sortes d'aciers non alliés, faiblement alliés ou fortement alliés, voire en alliages ferreux ou non ferreux traités thermiquement ou écrouis en fonction des conditions de service telles que par exemple : niveau de sollicitation mécanique, caractère corrosif du fluide intérieur ou extérieur aux tubes.

On peut également utiliser des tubes en acier peu résistant à la corrosion munis d'un revêtement par exemple en matériau synthétique empêchant tout contact entre l'acier et le fluide corrosif.

Les tubes 101, 101' sont munis à leurs extrémités d'éléments filetés mâles identiques 1, 1' et sont assemblés par l'intermédiaire d'un manchon 202 muni à chaque extrémité d'un élément fileté femelle 2, 2'.

Les éléments filetés mâles 1, 1' sont respectivement assemblés par vissage dans les éléments filetés femelles 2,2' en constituant deux joints filetés 100, 100' symétriques réunis par un talon 10 de quelques centimètres de longueur.

Le talon 10 du manchon possède un diamètre intérieur sensiblement identique à celui en extrémité des tubes 101, 101' de sorte que l'écoulement du fluide circulant intérieurement n'est pas perturbé.

Les joints filetés tubulaires 100, 100' étant symétriques, on ne décrira le fonctionnement que d'un seul de ces joints, par exemple le joint fileté tubulaire 100.

L'élément fileté mâle 1 comprend un filetage mâle 3 à filets trapézoïdaux du genre dit "buttress" selon spécification API 5B (API = American Petroleum Institute) ; ce filetage mâle 3 est conique et disposé sur l'extérieur de élément mâle et il est séparé de l'extrémité libre 7 dudit élément par une lèvre non filetée 11. L'extrémité libre 7 constitue une surface annulaire de butée axiale dite surface distale de butée axiale disposée sensiblement transversalement.

Jouxtant l'extrémité libre 7 sur la surface extérieur de la lèvre 11 se trouve une surface conique 5 formant une portée d'étanchéité mâle sur lèvre ; sa conicité est supérieure à celle du filetage mâle 3.

L'élément femelle 2 comprend des moyens conjugués de ceux de l'élément mâle 1, c'est-à-dire qu'ils correspondent de par la forme et sont agencés pour coopérer de par leur disposition sur l'élément fileté femelle avec les moyens mâles de l'élément fileté mâle.

L'élément femelle 2 comprend ainsi intérieurement un filetage femelle conique 4 et une partie non-filetée entre le filetage et le talon 10.

Cette partie non filetée comprend notamment une surface annulaire de butée axiale 8 d'orientation sensiblement transversale formant épaulement à l'extrémité du talon et une surface conique 6 formant portée d'étanchéité femelle immédiatement adjacente à l'épaulement du côté du filetage 4.

Après vissage complet du filetage mâle dans le filetage femelle, les surfaces de butée 7 et 8 sont en appui l'une contre l'autre tandis que les surfaces de portée 5, 6 interfèrent radialement et sont de ce fait sous pression de contact métal-métal. Les surfaces 5, 6 constituent ainsi des portées d'étanchéité métal-métal qui visent à rendre le joint fileté étanche même pour des pressions de fluide intérieur ou extérieur élevées, des fluides gazeux et pour des sollicitations diverses (traction axiale, compression axiale, flexion, torsion...), simples ou combinées, statiques ou fluctuantes.

De tels joints filetés sont dits supérieurs (ou "premium") compte tenu de leurs performances par rapport aux joints filetés tubulaires standards tels que ceux définis par la spécification API 5CT.

Des joints filetés tubulaires tels que 100 sur la figure 1 doivent néanmoins faire face à des impératifs géométriques contradictoires explicités aux figures schématiques 8 à 10.

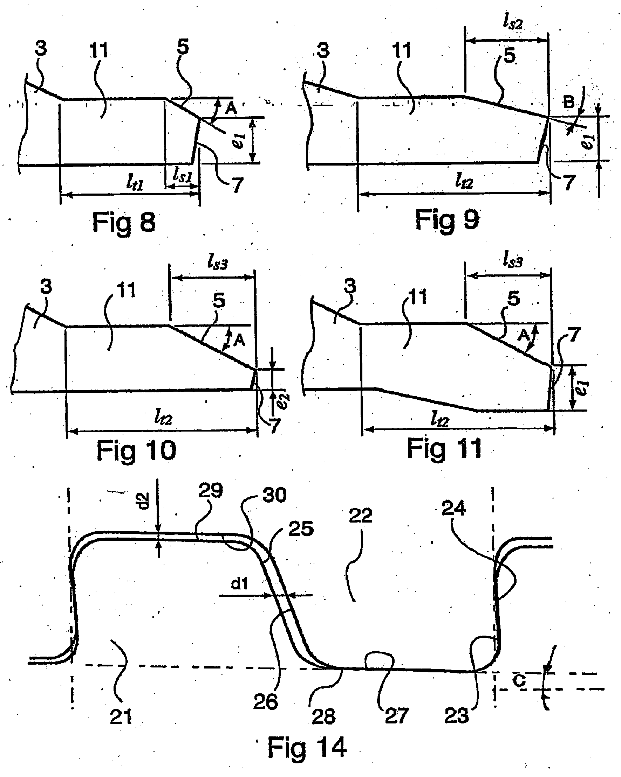

La longueur et l'épaisseur de lèvre au niveau de la portée d'étanchéité sur lèvre doivent être suffisantes pour obtenir une raideur radiale donnée de la lèvre qui se comporte comme un ressort (voir figure 8) ; la pression de contact pour une interférence radiale donnée varie ainsi avec la raideur radiale de la lèvre 11.

Cependant, lorsque le joint fileté est soumis à la pression d'un fluide interne ou externe, la lèvre fléchit, ce qui induit un démarrage des angles des portées d'étanchéité 5 et 6 et de ce fait une diminution de la largeur effective de contact et de la pression de contact intégrée. La flexion de la lèvre due à la pression de fluide est d'autant plus importante que la partie de lèvre 35 entre le début du filetage 3 et la portée d'étanchéité sur lèvre 5 est longue.

Si l'on veut pour des raisons qui seront exposées plus loin augmenter la longueur lₜ₁ jusqu'à une longeur lₜ₂ (figure 10) en augmentant la longueur de portée (lₛ₃ > lₛ₁), ce qui évite d'augmenter la longueur de la partie 35 de la lèvre 11, l'épaisseur radiale e₂ de la surface distale de butée axiale 7 devient insuffisante pour assurer une valeur suffisante de couple de vissage pour empêcher le dévissage inopiné du joint fileté tubulaire.

Pour palier à cet inconvénient, on peut conifier l'extrémité de la lèvre avant usinage de la portée 5 de sorte que sa surface périphérique intérieure possède vers son extrémité un diamètre inférieur (figure 11) ; une telle conification nécessite toutefois une opération de fabrication supplémentaire.

Pour palier à l'inconvénient indiqué à propos de la figure 10, on peut aussi diminuer la conicité de la portée d'étanchéité sur lèvre 5 (angle B < angle A = voirfigure 9) mais une telle configuration conduit à un frottement important des portées d'étanchéité 5, 6 en fin de vissage à partir du moment où elles interfèrent ; il en résulte des risques importants de grippage, notamment pour certains types de matériaux (aciers à forte teneur en Cr, alliages de Ni...).

La figure 2 présente un joint fileté tubulaire selon l'invention directement dérivé de celui de la figure 1 notamment par modification de la structure de la lèvre 11 qui comporte un appendice 13, la structure de l'élément fileté femelle étant adaptée en conséquence en reculant la surface femelle de butée axiale vers le centre du manchon 202 ; la longueur axiale du talon 10 de la figure 2 est de ce fait plus courte que sur la figure 1.

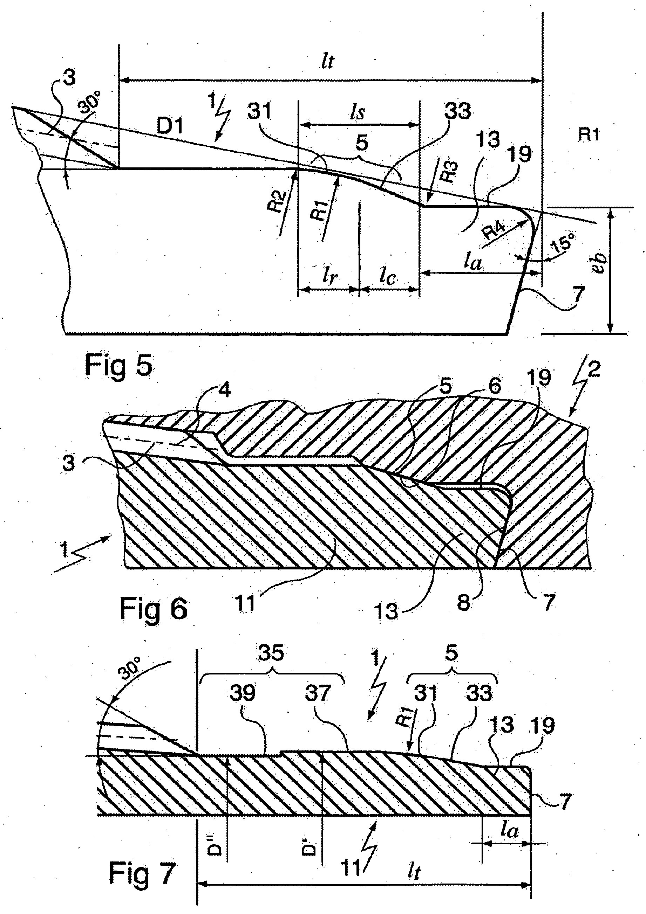

La figure 5 montre en détail la structure de la lèvre mâle 11 du joint fileté de la figure 2.

Selon la figure 5, la lèvre mâle 11 de longueur totale lₜ comporte une portée d'étanchéité sur lèvre 5 de largeur axiale totale lₛ qui est séparée de la surface distale de butée axiale 7 par un appendice 13 de longueur axiale lₐ.

La surface distale de butée axiale 7 est une surface conique concave, coaxiale au joint fileté et de demi-angle au sommet 75° (angle de 15° par rapport à la normale à l'axe).

Une telle disposition est connue pour augmenter la pression de contact entre portées d'étanchéité 5, 6 sur des joints filetés du type de la figure 1.

L'appendice 13 présente une surface périphérique extérieure cylindrique 19 qui est raccordée à la surface distale de butée axiale 7 par une surface torique de faible rayon R4.

La longueur axiale de l'appendice lₐ représente dans le cas de la figure 5 environ 25% de la longueur axiale totale de lèvre lₜ, ces distances étant prises par rapport au point d'intersection des surfaces 7 et 19.

Le rapport entre longueur axiale d'appendice lₐ et épaisseur radiale e_{b} de surface distale de butée axiale est d'environ 0,9. Un rapport trop élevé, supérieur à 3 risque d'entraîner le flambement de l'appendice.

La portée d'étanchéité sur lèvre 5 est une surface complexe notablement inclinée sur l'axe (inclinaison moyenne voisine de 15°) et elle est raccordée d'une part à l'appendice 13 par une surface torique de faible rayon R3 et d'autre part à la lèvre du côté filetage par une autre surface torique de faible rayon R2.

R3, R4 ont par exemple pour valeur de l'ordre de 0,5 à 1 mm ; R2 a pour valeur de l'ordre de 5 mm.

La portée d'étanchéité sur lèvre 5 est constituée :
a) du côté extrémité libre 7 d'une portion conique 33 de conicité 50 % (soit une inclinaison de 14° sur l'axe) de largeur de l_{c} de l'ordre par exemple de 1,5 mm et
b) du côté filetage d'une portion torique 31 de grand rayon R1 (par exemple 60 mm), de largeur lᵣ, (par exemple 1,5 mm) qui est tangente à la portion torique 33.

Ceci permet d'obtenir une portée d'étanchéité sur lèvre qui est courte (largeur lₛ voisine de 3 mm) et beaucoup plus inclinée sur l'axe que le filetage (conicité 6,25% soit une inclinaison sur l'axe de 1,8°), et par-là de minimiser les risques de grippage des portées d'étanchéité lors du vissage. Le moment du premier contact entre portées d'étanchéité au vissage est en effet retardé et la longueur hélicoïdale de frottement à partir de ce premier contact est réduite.

La configuration géométrique conique + torique à grand rayon du côté filetage permet d'obtenir un contact stable en largeur entre portées d'étanchéité 5, 6 alors que l'interférence radiale entre portées d'étanchéité 5, 6 et/ou entre filetages coniques 3, 4 et l'application de pression intérieure de fluide tendent à mettre la lèvre 11 "en banane" en faisant légèrement varier l'inclinaison de la portée d'étanchéité mâle d'une fraction de degré. Une telle variation d'inclinaison tend sur des portées d'étanchéité coniques à réduire sensiblement la largeur effective de contact et la pression de contact intégrée sur la largeur de portée.

L'existence d'une portion torique à grand rayon R1 du côté filetage (R1 préférablement entre 30 et 120 mm, dans le cas présent 60 mm) permet de conserver les avantages d'une portée d'étanchéité conique en conditions de service (stabilité de fonctionnement de cette portée).

La figure 6 montre la coopération des moyens disposés sur la lèvre mâle 11 et sur la partie correspondante femelle en position d'assemblage.

L'élément fileté femelle comporte une surface femelle de butée axiale 8 qui est conique convexe, de demi-angle au sommet égal ou sensiblement égal à celui de la surface distale 7 et qui forme un épaulement.

Au pied de cet épaulement, à distance axiale de la surface femelle de butée axiale et en regard de la portée d'étanchéité mâle 5 se trouve une portée d'étanchéité femelle 6 conique de conicité égale à celle de la portion conique 33 de la portée d'étanchéité mâle sur lèvre 5.

La largeur axiale de la portée d'étanchéité femelle 6 est voisine de celle totale lₛ de la portée d'étanchéité mâle sur lèvre 5 et est donc adaptée à un fonctionnement stable de ces portées d'étanchéité en service.

La surface périphérique intérieur de l'élément fileté femelle entre la portée d'étanchéité femelle 6 et la surface femelle de butée axiale est quelconque du moment qu'elle n'interfère pas radialement avec la surface périphérique extérieure 19 en regard de l'appendice 13.

Un court rayon est prévu pour raccordercette surface périphérique femelle à la surface femelle de butée axiale 8.

On notera tout d'abord que la situation de la portée d'étanchéité 5 non en extrémité libre de la lèvre limite la flexion de la lèvre lorsque le joint fileté est soumis à la pression intérieure ou extérieure d'un fluide et par là limite la diminution de largeur effective de contact et celle de pression de contact intégrée entre portées d'étanchéité 5, 6 pour les joints filetés soumis à de telles pressions internes ou externes, notamment internes.

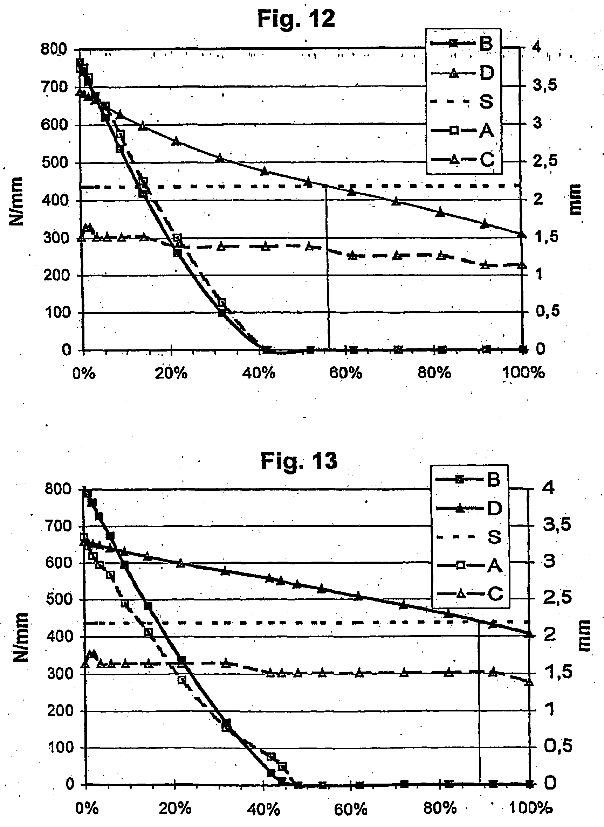

Les graphiques des figures 12 et 13 illustrent un avantage certain du joint fileté selon l'invention du type de la figure 2 (figure 13) par rapport au joint fileté similaire de l'état de la technique de la figure 1 (figure 12).

Le joint fileté de l'état de la technique étudié correspond à un joint fileté tubulaire supérieur VAM TOP^{®} selon catalogue VAM^{®} n° 940 édité par Vallourec Oil & Gas en juillet 1994 pour tubes de diamètre extérieur 244,48 mm et d'épaisseur 13,84 mm (9"5/8 x 53,5 lb/ft) en grade L80 (limite d'élasticité minimale 551 MPa).

Le joint fileté tubulaire selon l'invention a simplement été modifié par l'adjonction d'un appendice de longueur axiale 3 mm (la = 25 % lₜ) : voir figure 5.

On a étudié par calcul numérique selon la méthode des éléments finis (FEA) la variation de la largeur effective de contact et de la pression de contact intégré sur cette largeur pour les surfaces de butées 7, 8 et pour les portées d'étanchéité 5, 6 sur un joint fileté vissé au couple nominal de vissage en fonction de la charge de traction axiale à laquelle est soumis le joint fileté exprimée en % de la charge correspondant à la limite d'élasticité du corps, des tubes (PBYS).

En ce qui concerne les surfaces de butée 7, 8 on constate que la largeur effective de contact (courbe A), initialement de 3,8 mm diminue très vite et tombe à 0 pour une charge correspondant à 42 % PBYS. Au-dessus de cette charge, les surfaces de butée ne sont plus en contact. La pression de contact intégrée entre surfaces de butée (courbe B) suit le même profil (valeur initiale 770 N/mm).

La courbe C relative à l'évolution de la largeur de contact entre portées d'étanchéité indique une largeureffective de contact diminuant de 1,5 à 1,1 mm lorsque la charge de traction axiale passe de 0 à 100 %.

Cette faible variation de largeur effective de contact est suffisante pour faire chuter la pression de contact intégrée de 700 N/mm à 300 N/mm pour la même variation de charge de traction axiale (courbe D).

Des utilisateurs considèrent depuis quelques temps qu'il existe un risque de fuite en service lorsque la pression de contact intégrée calculée par élément finis est inférieure à 437 N/mm (droite S).

Un tel seuil est franchi pour le joint fileté de l'état de la technique dès que la charge de traction est supérieure à celle correspondant à 56 % PBYS : le critère utilisé est donc sévère.

A noter que les portées d'étanchéité selon la géométrie testée correspondent pourtant à celles 5 et 6 des figures 5 et 6 (portée mâle conique à 50 % de conicité + torique de 60 mm de rayon) qui sont considérées comme améliorant la stabilité du contact sous charge par rapport à de simples portées coniques.

Les mêmes calculs ont été effectués sur le joint fileté tubulaire modifié selon l'invention qui a été vissé sous le même couple nominal que le joint fileté de l'état de la technique.

Les courbes A, B, C, D et S de la figure 13 (joint fileté selon l'invention) ont la même signification que celles de la figure 12 (joint fileté de l'état de la technique).

Les courbes A, B et C de la figure 13 sont assez voisines de celles de la figure 12.

On notera, concernant la pression de contact intégrée sur les surfaces de butée (courbe B), une pression de contact intégrée légèrement supérieure de 30 N/mm, et un décollement des surfaces de butée axiale légèrement retardé (48 % PBYS contre 42 %) pour le joint fileté selon l'invention.

La principale différence concerne l'évolution de la pression de contact intégrée entre portées d'étanchéité (courbe D) qui diminue beaucoup moins vite sur le joint fileté selon l'invention de sorte que le seuil de 437 N/mm (droite S) n'est franchi qu'au-delà d'une charge correspondant à 89 % PBYS.

Le critère sur la pression de contact intégré, qui est un critère sévère, récemment introduit par des utilisateurs très préoccupés par les garanties d'étanchéité sur les joints filetés, est respecté pour un large éventail de conditions de service sur le joint fileté selon l'invention.

La faible raideur axiale de la lèvre 11 résultant de la présence de l'appendice 13 contribue aux meilleures performances d'étanchéité sous traction des joints filetés selon l'invention.

Cette faible raideur axiale induit tout d'abord une augmentation favorable de la raideur radiale pour les performances d'étanchéité du joint fileté.

La faible raideur axiale permet en outre à la lèvre d'emmagasiner en fin de vissage une importante déformation en compression axiale, déformation qui peut ensuite être avantageusement restituée lorsque le joint fileté est soumis à des charges de traction axiale.

Un appendice trop court (lₐ < 8 % lₜ) n'entraîne pas de gain suffisant sur les caractéristiques d'étanchéité sous charge de traction.

Un appendice trop long (lₐ > 75 % lₜ) risque d'entraîner le flambement de la lèvre et une diminution des performances d'étanchéité.

La lèvre et les moyens qui y sont associés (5,7,13) sont par ailleurs relativement faciles à réaliser par usinage.

D'autres avantages peuvent résulter de la faible raideur axiale de la lèvre du joint fileté selon l'invention.

Un premier avantage supplémentaire concerne la précision sur le couple réel de vissage.

Les joints filetés sont généralement vissés en position à l'aide de machines mécaniques ou hydrauliques dites "clés de vissage" qui développent des couples importants puisqu'il faut visser le joint fileté au-delà de l'accostage des surfaces de butée axiale.

Ces clés s'arrêtent lorsqu'un couple de vissage donné est atteint (couple nominal).

Néanmoins compte tenu de l'inertie de la clé, le couple réel obtenu peut être décalé par rapport au couple nominal désiré.

Ce décalage dépend de nombreux facteurs et peut être réduit en diminuant la vitesse de vissage, ce qui nuit à la productivité du vissage.

La diminution de raideur axiale de la lèvre sur le joint fileté selon l'invention permet d'obtenir une courbe de montée en couple moins raide entre accostage et position finale d'assemblage et donc soit d'obtenir moins d'écart entre couple nominal et couple réel de vissage soit de permettre un vissage plus rapide.

Un autre avantage supplémentaire concerne le comportement du joint fileté tubulaire sous charge de compression axiale.

La figure 14 illustre l'aspect de filets trapézoïdaux mâles 21 et femelle 22 d'un joint fileté à filetages coniques vissé en position.

Les filets mâles 21 présentent un sommet de filet 29, un fond de filet 27 tous deux inclinés d'un angle C (par exemple 1,8°) sur l'axe, un flanc porteur 23 et un flanc d'engagement 25.

Lés filets femelles 22 présentent de même un sommet de filet 28, un fond de filet 30, un flanc porteur 24 et un flanc d'engagement 26.

Du fait de la réaction sur les surfaces de butée 7, 8, les flancs porteurs mâles 23 et femelles 24 sont en contact alors que les flancs d'engagement 25, 26 présentent un jeu d₁.

Compte tenu de la conicité des filetages (angle d'inclinaison C), les sommets de filets femelles 28 interfèrent radialement avec les fonds de filets mâles 27 alors qu'il existe,un jeu d₂ entre sommets de filets mâles 29 et fonds de filets femelles 30.

Lorsque le joint fileté est soumis à des charges de compression axiale, il y a décollement des flancs porteurs 23, 24 initialement en contact et tous les efforts de compression sont alors supportés par les surfaces de butée axiale 7, 8 en sus des contraintes de compression résultant du vissage. Si les contraintes équivalentes de Von Mises dépassent alors la limite d'élasticité, il y a plastification et des risques ultérieurs de fuite et/ou de grippage après dévissage et revissage.

Une faible raideur axiale de lèvre permet de mettre en contact les flancs d'engagement 25, 26 qui reprennent alors les efforts de compression axiale avant que la contrainte équivalente sur la butée dépasse la limite d'élasticité.

Le joint fileté selon l'invention possède donc aussi d'excellentes caractéristiques de résistance mécanique en compression axiale.

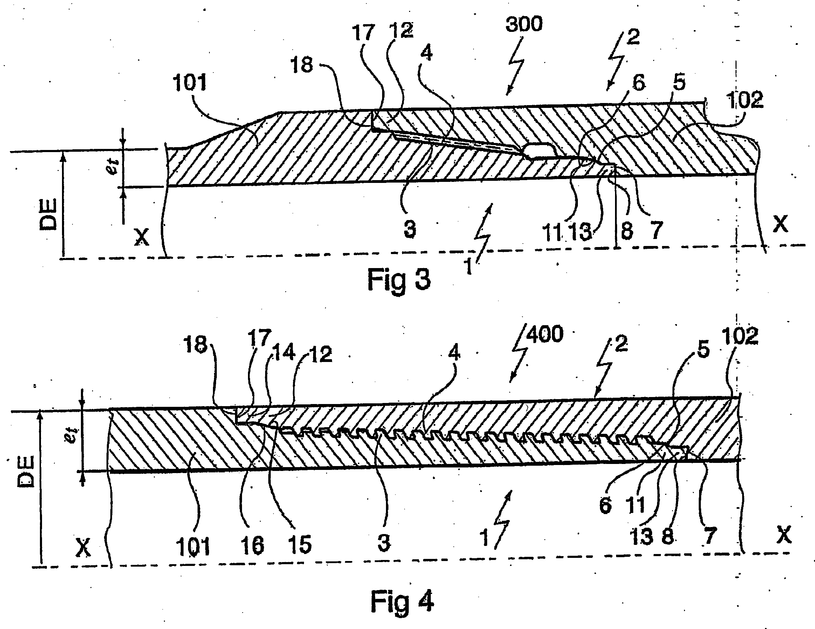

La figure 3 représente un autre type de joint fileté tubulaire selon l'invention, pour colonnes montantes sous-marines dites "work over risers".

Le joint fileté 300 est du type intégral, l'élément fileté mâle 1 étant réalisé en extrémité d'un premier tube 101 et l'élément fileté femelle 2 à l'extrémité d'un deuxième tube 102 par usinage des tubes.

Alternativement, les éléments filetés 1 et 2 peuvent résulter d'un rengraissement des extrémités de tubes par forgeage (augmentation du diamètre extérieur et/ou diminution du diamètre intérieur).

Alternativement encore, les éléments filetés mâles et femelles peuvent être rapportés sur les tubes par exemple par soudage.

Ce type de joint fileté comporte 2 paires de surfaces de butée axiale, chaque paire comprenant une surface distale de butée axiale.

Une première paire dite "butée interne" est constituée comme précédemment par une surface distale 7 en extrémité libre de l'élément fileté mâle 1 et une surface annulaire 8 formant épaulement sur l'élément fileté femelle 2.

L'autre paire dite "butée externe" est constituée symétriquement d'une surface distale 18 en extrémité libre de l'élément fileté femelle 2 et une surface annulaire 17 formant épaulement sur l'élément fileté mâle 1.

Toutes les 4 surfaces de butée axiale sont planes, perpendiculaires à l'axe du joint fileté 300.

Une lèvre 11, 12 sépare chaque butée des filetages.

La lèvre femelle 12 ne comporte pas de portée d'étanchéité.

La lèvre mâle 11 (voir figure 7) comporte une portée d'étanchéité sur lèvre 5 séparée axialement de la surface distale de butée axiale 7 par un appendice 13.

La portée d'étanchéité 5 est une surface complexe constituée du côté extrémité libre par une portion conique 33 inclinée à 50 % et du côté filetage 3 par une portion torique 31 de rayon R1 (40 mm) tangente à la portion conique 33, la portée d'étanchéité femelle 6 étant simplement conique de conicité 50 % et de largeur axiale adaptée à celle totale de la portée d'étanchéité mâle 5.

L'appendice 13 présente une surface périphérique extérieure 19 de forme cylindrique et possède une longueur axiale lₐ de 5 mm représentant environ 9 % de la longueur axiale totale de lèvre lₜ.

Le rapport longueur axiale d'appendice sur épaisseur radiale de surface distale de butée axiale est d'environ 0,75.

La partie de lèvre située entre portée d'étanchéité sur lèvre 5 et filetage 3 comprend sur sa surface périphérique extérieure 35 deux surfaces cylindriques 37 et 39, la surface 39 démarrant au pied du filetage 3 étant de plus faible diamètre D" que la surface 37 du côté portée d'étanchéité (diamètre D') avec (D" - D') valant environ 1 mm.

Un tel gradin augmente la raideur radiale de la portée d'étanchéité sur lèvre 5 et donc les pressions de contact entre portées d'étanchéité 5, 6. Il réduit également la déformation "en banane" de la lèvre lorsque le joint fileté 300 est soumis à la pression d'un fluide extérieur. Il contribue en outre en combinaison avec l'appendice 13 à protéger la portée d'étanchéité 5 de marques d'endommagement en cas de désalignement à l'engagement des éléments filetés.

Le tableau suivant 1 permet de comparer les pressions de contact intégrées pour 2 joints filetés pour "work over risers" pour des tubes de diamètre extérieur 219,08 mm (8" 5/8) et 17,8 mm d'épaisseur en grade P110 (limite d'élasticité minimale 758 MPa) sans appendice 13 (état de la technique) et avec appendice 13 (selon l'invention).

En fin de vissage, les surfaces 17, 18 de la butée externe sont les premières en contact (butée primaire), le vissage étant poursuivi jusqu'à mettre en butée sous pression de contact les surfaces 7, 8 de la butée interne (butée secondaire).

Le tableau 1 donne des valeurs de pressions de contact intégrées sur la largeur de contact au niveau des portées d'étanchéité obtenues par calcul numérique en fin de vissage et sous traction axiale.

**tableau 1 : Pression de contact intégrée entre portées d'étanchéité.**

| | Pression de contact intégrée (N/mm) | |
|---|---|---|
| | joint fileté de l'état de la technique | joint fileté selon l'invention (figure 3) |
| 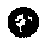 en fin de vissage | 1286 | 1523 |
| 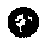 vissage + 80 % PBYS | 1214 | 1462 |
| 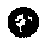 vissage + 100 % PBYS | 1188 | 1442 |

Les pressions de contact intégrées sont plus élevées et décroissent un peu moins vite sur le joint fileté selon l'invention pour cette configuration avec accostage en premier des surfaces de butée externe. L'appendice ayant une longueur très limitée (9 % de la longueur totale de lèvre) et la lèvre 11 étant très raide radialement (10 mm d'épaisseur au niveau du gradin 37), les différences par rapport au joint fileté de l'état de la technique sont moindres que dans l'exemple précédemment décrit (VAM TOP^{®}).

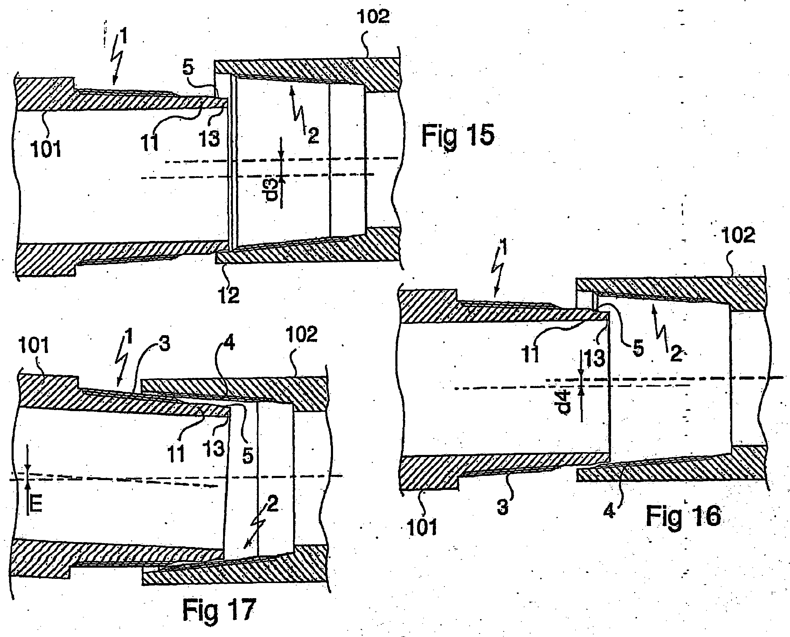

Les figures 15, 16, 17 montrent sur le joint fileté 300 de la figure 3 les conditions limites d'engagement des éléments filetés compte tenu de la présence de l'appendice 13.

La figure 15 montre le désalignement radial d3 maximal possible au tout début de l'engagement des éléments filetés 1 et 2, la portée d'étanchéité mâle sur lèvre 5 venant au contact de l'extrémité libre femelle 18 : d3 peut dépasser 10 mm pour le joint fileté 300 de dimensions indiquées ci-avant.

La figure 16 montre le désalignement radial d4 maximal possible un peu plus tard lorsque la portée d'étanchéité mâle sur lèvre 5 vient au contact du 1^{er} filet femelle : d4 vaut environ 8 mm pour le joint fileté considéré.

La figure 17 montre le désalignement angulaire E maximal possible, la portée d'étanchéité mâle sur lèvre 5 étant au contact du filetage femelle et les filets mâles et femelles n'étant pas encore engagés : E vaut environ 4°.

Ces valeurs de d3, d4 et E sont plus élevées qu'en l'absence d'appendice 13. Les joints filetés selon l'invention sont donc-plus tolérants vis-à-vis de conditions défectueuses d'engagement des éléments filetés.

L'appendice 13 protège bien entendu la portée d'étanchéité sur lèvre 5 des chocs axiaux en bout lors de manipulations sur chantier.

A noter que dans le cas de la figure 17, l'appendice permet aussi de créer une protection ou barrière radiale pour la portion conique 33 de la portée d'étanchéité sur lèvre, qui est la portion la plus critique pour l'étanchéité.

L'ensemble de la portée d'étanchéité peut en outre être protégé si comme montré sur la figure 5, l'appendice 13 possède une longueur axiale lₐ telle que la portée d'étanchéité sur lèvre 5 est située du côté de l'élément fileté par rapport à la droite D1 qui passe par le sommet du 1^{er} filet mâle et qui tangente l'extrémité libre de l'élément fileté. La droite D1 matérialise par exemple la génératrice des sommets de filets femelles sur la figure 17.

La figure 4 représente un joint fileté intégral 400 dit "flush" à diamètre intérieur et extérieur constant, à surfaces de butée interne (7, 8) et externe (17, 18) et à 2 paires de portées d'étanchéité : une paire interne (5, 6) et une paire externe (15, 16).

Le joint fileté 400 est étanche tant aux pressions extérieures grâce à la paire externe de portées d'étanchéité et aux pressions internes grâce à la paire interne de portées d'étanchéité.

La portée d'étanchéité mâle 5 de la paire interne et la portée d'étanchéité femelle 16 de la paire externe sont des portées d'étanchéité sur lèvre.

Elles sont séparées des surfaces distales de butée axiale 7, 18 sur les éléments filetés où elles sont réalisées par un appendice 13, 14.

Ces appendices 13, 14 permet de diminuer la raideur axiale des lèvres 11, 12 et de rendre maximale la raideur radiale de ces lèvres.

Ceci permet de maximiser les performances d'étanchéité du joint fileté tant vis à vis des fluides extérieurs qu'intérieurs même sous traction axiale relativement élevée.

La tenue mécanique en compression est également améliorée.

La faible raideur axiale des lèvres 11, 12 permet de continuer le vissage suffisamment après l'accostage d'une paire de butée interne ou externe, préférentiellement interne, jusqu'à mise en butée axiale de la seconde paire de surfaces de butée.

Le retard au décollement des surfaces de butée sous traction axiale permet d'éviter dans une certaine mesure ou en tout cas de limiter les battements de ces surfaces en cas de charge fluctuante de traction ou de flexion, de tels battements étant source à terme d'amorce de fissure de fatigue par phénomène dit de "fretting corrosion".

La présente invention n'est pas susceptible d'être limitée aux joints filetés tubulaires qui viennent d'être décrits.

Elle peut s'appliquer à tout type de joint fileté tubulaire, notamment par exemple présentant des filetages coniques ou cylindriques, à une ou plusieurs parties filetées étagées ou non, avec filets trapézoïdaux ou triangulaires, avec des filets dits "coin" à largeur ou pas variable.

## Revendications

1. Joint fileté tubulaire supérieur (100, 300, 400) comprenant un élément fileté mâle (1) à l'extrémité d'un premier composanttubulaire (101) et un élément fileté femelle (2) à l'extrémité d'un second composant tubulaire (102, 202), l'élément fileté mâle comprenant un filetage mâle (3), au moins une portée d'étanchéité mâle (5, 15) sur sa surface périphérique extérieure et au moins une surface mâle de butée axiale (7, 17), l'élément fileté femelle (2) comprenant de manière correspondante un filetage femelle (4), au moins une portée d'étanchéité femelle (6,16) sur sa surface périphérique intérieure et au moins une surface femelle de butée axiale (8, 18), le filetage mâle étant vissé dans le filetage femelle jusqu'à ce qu'au moins une surface mâle de butée axiale (7, 17) coopère en réaction de butée au couple de vissage avec la surface femelle de butée axiale correspondante (8,18), chaque portée d'étanchéité mâle (5,15) interférant alors radialement avec une portée d'étanchéité femelle correspondante (6, 16), au moins un élément fileté présentant parmi la ou les surfaces de butée en réaction de butée une surface dite "surface distale de butée axiale" (7, 18) réalisée sur la surface frontale d'extrémité libre de l'élément fileté et coopérant sur substantiellement toute sa surface avec une surface de butée axiale sur l'élément conjugué, une lèvre (11,12) s'étendant du filetage (3, 4) à la surface distale de butée axiale sur l'élément fileté considéré (7, 18), une portée d'étanchéité dite "portée d'étanchéité sur lèvre" (5, 16) étant disposée sur la lèvre (11, 12) à une distance donnée de l'extrémité du filetage, la lèvre comprenant une partie dite "appendice" (13,14) entre l'extrémité libre de la lèvre et la portée d'étanchéité sur lèvre (5, 16) de manière à ce que l'appendice augmente la raideur radiale de la lèvre et diminue sa raideur axiale, la surface périphérique (19) dudit appendice (13, 14) étant distincte de la portée d'étanchéité sur lèvre (5, 16) et raccordée à celle-ci par une surface torique concave, l'inclinaison de la portée d'étanchéité sur lèvre (5, 16) par rapport à l'axe du joint étant supérieure à celle du filetage (3, 4).

2. Joint fileté tubulaire supérieur selon la revendication 1, **caractérisé en ce que** l'appendice possède une longueur axiale (la) comprise entre 8% et 75% de la longueur axiale totale de la lèvre (it):

3. Joint fileté tubulaire supérieur selon l'une quelconque des revendications 1 à 2, **caractérisé en ce que** l'appendice possède une longueur axiale (la) et la surface distale de butée axiale une épaisseur radiale (eb) telles que le rapport longueur axiale d'appendice sur épaisseur radiale de surface distale de butée axiale est inférieur ou égal à 3.

4. Joint fileté tubulaire supérieur selon l'une quelconque des revendications 1 à 3, **caractérisé en ce que** la longueur axiale de l'appendice (la) est adaptée pour que la portée d'étanchéité sur lèvre (5) soit située du côté de élément fileté (1) sur lequel elle est implantée par rapport à la droite (D1) qui passe par le sommet du premier filet du filetage (3) et qui est tangente à l'extrémité libre dudit élément fileté (1), ce qui permet de protéger la portée d'étanchéité sur lèvre (5) de dommages lors de manipulations des éléments filetés.

5. Joint fileté tubulaire supérieur selon l'une quelconque des revendications 1 à 4, **caractérisé en ce que** la portée d'étanchéité sur lèvre (5, 16) est une surface choisie dans le groupe formé par les surfaces coniques, toriques ou complexes, ces dernières comprenant des combinaisons de surfaces coniques, de surfaces cylindriques et de surfaces toriques.

6. Joint fileté tubulaire supérieur selon la revendication 5, **caractérisé en ce que** la portée d'étanchéité sur lèvre (5) est une surface complexe comprenant deux portions de surfaces tangentes entre elles, à savoir une portion conique (33) située du côté de la surface distale de butée axiale (7) et une portion torique (31) de rayon (R1) supérieur à 20 mm située du côté du filetage (3) et **en ce que** la portée d'étanchéité correspondante (6) sur l'autre élément fileté est une surface conique de conicité sensiblement identique à celle de la portion conique (33) de la portée d'étanchéité sur lèvre et de largeur axiale adaptée à la largeur axiale totale (ls) de la portée d'étanchéité sur lèvre.

7. Joint fileté tubulaire supérieur selon l'une quelconque des revendications 1 à 6, **caractérisé en ce que** la surface périphérique (35) de la lèvre située entre la portée d'étanchéité sur lèvre (5) et le filetage (3) comprend deux surfaces globalement cylindriques de diamètres légèrement différents, la surface globalement cylindrique de plus faible 30 diamètre (39) étant raccordée au pied du filetage et celle de plus fort diamètre (37) à la portée d'étanchéité sur lèvre (5).

8. Joint fileté tubulaire supérieur (100) selon l'une quelconque des revendications précédentes caractérisé en ce 45 qu'un seul élément fileté (1) présente une lèvre (11) avec une portée d'étanchéité sur lèvre (5), un appendice (13) et une surface distale de butée axiale (7), l'autre élément fileté (2) ne présentant pas l'ensemble de ces moyens.

9. Joint fileté tubulaire supérieur (300) selon la revendication 8, **caractérisé en ce que** l'autre élément fileté (2) du joint fileté tubulaire présente également une surface distale de butée axiale (18) mais pas de portée d'étanchéité sur lèvre.

10. Joint fileté tubulaire supérieur (400) selon l'une quelconque des revendications 1 à 8 **caractérisé en ce que** les deux éléments filetés. (1, 2) du joint fileté tubulaire présentent chacun une lèvre (11,12) avec une portée d'étanchéité sur lèvre (5, 16), un appendice (13, 14) et une surface distale de butée axiale (7, 18).

## Patentansprüche

1. Hochwertige Rohrgewindeverbindung (100, 300, 400) mit einem Außengewindeelement (1) am Ende eines ersten rohrförmigen Bauteils (101) und mit einem Innengewindeelement (2) am Ende eines zweiten rohrförmigen Bauteils (102, 202), wobei das Außengewindeelement ein Außengewinde (3), mindestens ein Außendichtungsauflager (5, 15) auf seiner Außenumfangsfläche und mindestens eine axiale Außenanschlagfläche (7, 17) aufweist, das Innengewindeelement (2) entsprechend ein Innengewinde (4), mindestens ein Innendichtungsauflager (6, 16) auf seiner Innenumfangsfläche und mindestens eine axiale Innenanschlagfläche (8, 18) aufweist, wobei das Außengewinde in das Innengewinde geschraubt wird, bis mindestens eine axiale Außenanschlagfläche (7, 17) in Anschlagreaktion auf das Schraubmoment mit der entsprechenden axialen Innenanschlagfläche (8, 18) zusammenwirkt, wobei jedes Außendichtungsauflager (5, 15) dann radial mit einem entsprechenden Innendichtungsauflager (6, 16) interferiert, wobei mindestens ein Gewindeelement unter der oder den Anschlagflächen eine so genannte "distale axiale Anschlagfläche" (7, 18) hat, die auf der Stirnfläche des freien Endes des Gewindeelements hergestellt ist und im Wesentlichen über ihre ganze Fläche mit einer axialen Anschlagfläche auf dem zugeordneten Element zusammenwirkt, wobei eine Lippe (11, 12) sich vom Gewinde (3, 4) bis zu der distale axiale Anschlagfläche auf dem betrachteten Gewindeelement (7, 18) erstreckt, wobei ein so genanntes "Dichtungsauflager auf Lippe" (5, 16) auf der Lippe (11, 12) in einem gegebenen Abstand vom Ende des Gewindes angeordnet ist, wobei die Lippe einen "Ansatz " genannten Bereich (13, 14) zwischen dem freien Ende der Lippe und dem Dichtungsauflager auf Lippe (5, 16) aufweist, derart, dass der Ansatz die radiale Steifheit der Lippe erhöht und ihre axiale Steifheit verringert, wobei die Umfangsfläche (19) des Ansatzes (13, 14) sich von dem Dichtungsauflager auf Lippe (5, 16) verschieden ist und an dieses über eine konkave Torusfläche anschließt, wobei die Neigung des Dichtungsauflagers auf Lippe (5, 16) bezüglich der Achse der Verbindung größer als diejenige des Gewindes (3, 4) ist.

2. Hochwertige Rohrgewindeverbindung nach Anspruch 1, **dadurch gekennzeichnet, dass** der Ansatz eine axiale Länge (la) von zwischen 8 % und 75 % der axialen Gesamtlänge der Lippe (It) besitzt.

3. Hochwertige Rohrgewindeverbindung nach einem der Ansprüche 1 bis 2, **dadurch gekennzeichnet, dass** der Ansatz eine derartige axiale Länge (la) und die distale axiale Anschlagfläche eine derartige radiale Dicke (eb) besitzen, dass das Verhältnis der axialen Länge des Ansatzes zur radialen Dicke der distalen axialen Anschlagfläche kleiner als oder gleich 3 ist.

4. Hochwertige Rohrgewindeverbindung nach einem der Ansprüche 1 bis 3, **dadurch gekennzeichnet, dass** die axiale Länge (la) des Ansatzes angepasst ist, damit das Dichtungsauflager auf Lippe (5) sich auf der Seite des Gewindeelements (1) befindet, auf der es bezüglich der Geraden (D1) angeordnet ist, die durch den Scheitel des ersten Gewindegangs des Gewindes (3) verläuft und die das freie Ende des Gewindeelements (1) tangiert, was es ermöglicht, das Dichtungsauflager auf Lippe (5) bei Manipulationen der Gewindeelemente vor Schäden zu schützen.

5. Hochwertige Rohrgewindeverbindung nach einem der Ansprüche 1 bis 4, **dadurch gekennzeichnet, dass** das Dichtungsauflager auf Lippe (5, 16) eine Fläche ist, die aus der Gruppe ausgewählt wird, die von den kegeligen, torischen oder komplexen Flächen gebildet wird, wobei letztere Kombinationen von kegeligen Flächen, zylindrischen Flächen und torischen Flächen enthalten.

6. Hochwertige Rohrgewindeverbindung nach Anspruch 5, **dadurch gekennzeichnet, dass** das Dichtungsauflager auf Lippe (5) eine komplexe Fläche ist, die zwei einander tangierende Flächenabschnitte aufweist, nämlich einen kegeligen Abschnitt (33), der sich auf der Seite der distalen axialen Anschlagfläche (7) befindet, und einen torischen Abschnitt (31) mit einem Radius (R1) größer als 20 mm, der sich auf der Seite des Gewindes (3) befindet, und dass das entsprechende Dichtungsauflager (6) auf dem anderen Gewindeelement eine kegelige Fläche mit einer Kegelneigung im Wesentlichen gleich derjenigen des kegeligen Abschnitts (33) des Dichtungsauflagers auf Lippe und mit einer an die axiale Gesamtbreite (Is) des Dichtungsauflagers auf Lippe angepassten axialen Breite ist.

7. Hochwertige Rohrgewindeverbindung nach einem der Ansprüche 1 bis 6, **dadurch gekennzeichnet, dass** die Umfangsfläche (35) der Lippe, die sich zwischen dem Dichtungsauflager auf Lippe (5) und dem Gewinde (3) befindet, zwei global zylindrische Flächen mit geringfügig unterschiedlichen Durchmessern aufweist, wobei die global zylindrische Fläche mit geringerem Durchmesser (39) an den Fuß des Gewindes und diejenige mit größerem Durchmesser (37) an das Dichtungsauflager auf Lippe (5) anschließt.

8. Hochwertige Rohrgewindeverbindung (100) nach einem der vorhergehenden Ansprüche, **dadurch gekennzeichnet, dass** nur ein Gewindeelement (1) eine Lippe (11) mit einem Dichtungsauflager auf Lippe (5), einen Ansatz (13) und eine distale axiale Anschlagfläche (7) aufweist, während das andere Gewindeelement (2) die Gesamtheit dieser Mittel nicht aufweist.

9. Hochwertige Rohrgewindeverbindung (300) nach Anspruch 8, **dadurch gekennzeichnet, dass** das andere Gewindeelement (2) der Rohrgewindeverbindung ebenfalls eine distale axiale Anschlagfläche (18), aber kein Dichtungsauflager auf Lippe aufweist.

10. Hochwertige Rohrgewindeverbindung (400) nach einem der Ansprüche 1 bis 8, **dadurch gekennzeichnet, dass** die zwei Gewindeelemente (1, 2) der Rohrgewindeverbindung je eine Lippe (11, 12) mit einem Dichtungsauflager auf Lippe (5, 16), einen Ansatz (13, 14) und eine distale axiale Anschlagfläche (7, 18) aufweisen.

## Claims

1. A premium threaded tubular connection (100, 300, 400) comprising a male threaded element (1) at the end of a first tubular component (101) and a female threaded element (2) at the end of a second tubular component (102, 202), the male threaded element comprising a male threading (3), at least one male sealing surface (5, 15) on its external peripheral surface and at least one male axial abutment surface (7, 17), the female threaded element (2) correspondingly comprising a female threading (4), at least one female sealing surface (6, 16) on its internal peripheral surface and at least one female axial abutment surface (8, 18), the male threading being made up into the female threading until at least one male axial abutment surface (7, 17) co-operates with the corresponding female axial abutment surface (8, 18) to produce an abutting reaction against the makeup torque, each male sealing surface (5, 15) then interfering radially with a corresponding female sealing surface (6, 16), at least one threaded element having a surface termed a "distal axial abutment surface" (7, 18) among the abutment surface or surfaces producing an abutting reaction, formed on the front surface of the free end of the threaded element, and cooperating over substantially all its surface with an axial abutment surface on the mating element, a lip (11, 12) extending from the threading (3, 4) to the distal axial abutment surface on the threaded element (7, 18) under consideration, a sealing surface termed the "lip sealing surface" (5, 16) being located on the lip (11, 12) at a given distance from the end of the threading, the lip comprising a portion termed "appendix" (13, 14) between the free end of the lip and the lip sealing surface (5, 16) so that the appendix increases the radial stiffness of the lip and reduces the axial stiffness of the lip, the peripheral surface (19) of said appendix (13, 14) being distinct from the lip sealing surface (5, 16) and connected to it by a concave toric surface, the inclination of the lip sealing surface (5, 16) with respect to the connection axis being more than the one of the threading (3, 4).

2. A premium threaded tubular connection according to claim 1, **characterized in that** the appendix has an axial length (lₐ) in the range 8% to 75% of the total axial length of the lip (lₜ).

3. A premium threaded tubular connection according to any one of claims 1 to 2, **characterized in that** the appendix has an axial length (lₐ) and the distal axial abutment surface has a radial thickness (e_{b}) such that the ratio of the axial length of the appendix to the radial thickness of the distal axial abutment surface is 3 or less.

4. A threaded tubular connection according to any one of claims 1 to 3, **characterized in that** the axial length of the appendix (lₐ) is adapted so that the lip sealing surface (5) is located on the side of the threaded element (1) on which it is located with respect to the straight line (D1) that passes through the crest of the first thread of the threading (3) and which is tangential to the free end of the threaded element (1), which enables to protect the lip sealing surface (5) from damage during handling of the threaded elements.

5. A premium threaded tubular connection according to any one of claims 1 to 4, **characterized in that** the lip sealing surface (5, 16) is a surface selected from the group formed by conical, toric or complex surfaces, these latter comprising combinations of conical surfaces, cylindrical surfaces and toric surfaces.

6. A premium threaded tubular connection according to claim 5, **characterized in that** the lip sealing surface (5) is a complex surface comprising two portions of surfaces that are mutually tangential, namely a conical portion (33) located on the side of the distal axial abutment surface (7) and a toric portion (31) with a radius (R1) of more than 20 mm located on the threading side (3) and **in that** the corresponding sealing surface (6) on the other threaded element is a conical surface with a taper that is substantially identical to that of the conical portion (33) of the lip sealing surface and with an axial width that is adapted to the total axial width (lₛ) of the lip sealing surface.

7. A premium threaded tubular connection according to any one of claims 1 to 6, **characterized in that** the peripheral surface (35) of the lip located between the lip sealing surface (5) and the threading (3) comprises two generally cylindrical surfaces with slightly different diameters, the generally cylindrical surface with the smaller diameter (39) being connected to the root of the threading, and that with the larger diameter (37) to the lip sealing surface (5).

8. A premium threaded tubular connection (100) according to any of the preceding claims, **characterized in that** a single threaded element (1) has a lip (11) with a lip sealing surface (5), an appendix (13) and a distal axial abutment surface (7), the other threaded element (2) not exhibiting all of these means.

9. A premium threaded tubular connection (300) according to claim 8, **characterized in that** the other threaded element (2) of the threaded tubular connection also exhibits a distal axial abutment surface (18), but not a lip sealing surface.

10. A premium threaded tubular connection (400) according to any one of claims 1 to 8, **characterized in that** the two threaded elements (1, 2) of the threaded tubular connection each have a lip (11, 12) with a lip sealing surface (5, 16), an appendix (13, 14) and a distal axial abutment surface (7, 18).
